# EUROPEAN PATENT SPECIFICATION

(11) **EP 4 293 649 B1**
(45) Date of publication and mention of the grant of the patent: **16.09.2026**
(21) Application number: 21932849.9
(22) Date of filing: 22.03.2021
(51) Int. Cl.: G06F 21/62, G09C 1/00, H04L 9/00, H04L 9/08

(54) **SECRET SEARCH METHOD, SECRET SEARCH SYSTEM, SECRET SEARCH DEVICE, ENCRYPTION DEVICE, SEARCHER TERMINAL, AND PROGRAM**
GEHEIMES SUCHVERFAHREN, GEHEIMES SUCHSYSTEM, GEHEIME SUCHVORRICHTUNG, VERSCHLÜSSELUNGSVORRICHTUNG, SUCHERENDGERÄT UND PROGRAMM
PROCÉDÉ DE RECHERCHE DE SECRET, SYSTÈME DE RECHERCHE DE SECRET, DISPOSITIF DE RECHERCHE DE SECRET, DISPOSITIF DE CHIFFREMENT, TERMINAL DE RECHERCHE ET PROGRAMME

(43) Date of publication of application: 20.12.2023
(73) Proprietor: NTT, Inc., Tokyo 100-8116 (JP)
(72) Inventor: TAKAHASHI, Satoshi, Musashino-shi, Tokyo 180-8585 (JP); CHIDA, Koji, Musashino-shi, Tokyo 180-8585 (JP); ICHIKAWA, Atsunori, Musashino-shi, Tokyo 180-8585 (JP)
(74) Representative: MERH-IP Matias Erny Reichl Hoffmann Patentanwälte PartG mbB
(86) International application number: PCT/JP2021/011664
(87) International publication number: WO 2022/201235

(56) References cited:
- WO-A1-2016/203555
- WO-A1-2016/203555
- JP-A- 2016 012 111
- JP-A- 2017 111 793
- JP-A- 2017 111 793
- JP-A- 2017 175 244
- JP-A- 2018 042 045
- JP-A- 2019 121 188
- US-A1- 2015 381 348
- "Information technology - Database languages - SQL - Part 1: Framework (SQL/Framework)", ISO/IEC 9075-1:2016, IEC, 3, RUE DE VAREMBÉ, PO BOX 131, CH-1211 GENEVA 20, SWITZERLAND, 14 December 2016 (2016-12-14), pages 1 - 78, XP082011214

## Description

### TECHNICAL FIELD

The present invention relates to a secure computation technology, and more particularly, to a technology for searching data similar to search condition data while keeping search target data secret.

### BACKGROUND ART

In recent years, surveillance cameras and Internet of Things (IoT) technologies have become widespread, and a large of private data such as surveillance camera videos are accumulated. By applying an image search technology, it is possible to extract image data similar to image data input as a search condition from the accumulated surveillance camera videos. Such a technology is expected to be utilized in various fields such as access and exit management to and from facilities and information provision to an investigative agency when an incident or an accident occurs. However, the image data to be searched is the record of personal life, and needs to be appropriately managed so that leakage of private data does not occur.

Assuming the usage as described above, it is natural to apply a secure computation technology as a search technology while securing confidentiality of data. Patent Literature 1, JP 2016-71639 A, discloses a technology in which features of a visitor extracted from a surveillance camera video or the like is kept secret by secret sharing or the like, and the secrecy information is searched to verify a visitor. Patent Literature 2, WO 2016/203555 A1, relates to a similarity secret retrieval system and a similarity confidential retrieval method for retrieving data similar to data owned by itself from plain text stored in a server or encrypted data.

### SUMMARY OF THE INVENTION

### PROBLEMS TO BE SOLVED BY THE INVENTION

However, in case a secure computation technology is applied, it takes enormous computation cost to directly input image data and perform search by secure computation, which is not realistic. The conventional technology disclosed in Patent Literature 1 is more efficient than simply performing secure search on image data because search is performed by secure computation after image data is transformed into a feature. However, since the secure search is performed for all the features as the search target, the processing time may increase exponentially with respect to the number of data items as the search target depending on the secure computation algorithm.

In view of the above technical problems, an objective of the present invention is to efficiently perform data search by secure computation.

### MEANS TO SOLVE THE PROBLEMS

The present disclosure provides a secure search method, a secure search system, a secure search apparatus, an encryption apparatus, a searcher terminal, and a program, having the features of respective independent claims. The dependent claims relate to preferred embodiments.

A secure search method according to an aspect of the present invention is a secure search method performed by a secure search system including at least one secure search apparatus, an encryption apparatus, and a searcher terminal, the secure search method including: encrypting a target feature extracted from target data that is a search target by a target feature encryption unit of the encryption apparatus; encrypting a target flag representing an attribute of the target data by a target flag encryption unit of the encryption apparatus; encrypting a condition feature extracted from condition data that is a search condition, by a condition feature encryption unit of the searcher terminal; encrypting a condition flag representing an attribute of the condition data by a condition flag encryption unit of the searcher terminal; acquiring an intermediate search result indicating a ciphertext of a target feature corresponding to a target flag matching the condition flag while keeping the target flag and the condition flag secret using a ciphertext of the target flag and a ciphertext of the condition flag, by a flag search unit of the secure search apparatus; and acquiring a search result indicating the ciphertext of the target data corresponding to the target feature similar to the condition feature while keeping the target feature secret and the condition feature using the ciphertext of the target feature indicated by the intermediate search result and the ciphertext of the condition feature by a feature search unit of the secure search apparatus.

### EFFECTS OF THE INVENTION

According to the present invention, data search by secure computation can be efficiently performed.

### BRIEF DESCRIPTION OF THE DRAWINGS

Fig. 1 is a diagram illustrating a functional configuration of a secure search system.
Fig. 2 is a diagram illustrating a functional configuration of a secure search apparatus.
Fig. 3 is a diagram illustrating a functional configuration of an encryption apparatus.
Fig. 4 is a diagram illustrating a functional configuration of a searcher terminal.
Fig. 5 is a diagram illustrating a processing procedure of a secure search method (data registration).
Fig. 6 is a diagram illustrating a processing procedure of a secure search method (data search).
Fig. 7 is a diagram illustrating a processing procedure of a secure search method (data search).
Fig. 8 is a diagram illustrating a functional configuration of a computer.

### DETAILED DESCRIPTION OF THE EMBODIMENTS

The present invention applies a secure computation technology to implement a secure search system for sensitive data. In order to efficiently perform search even when secure computation of a large computation cost is used, a feature and an attribute of original data are generated from the original data in advance outside of the search system (for example, when the original data as the search target is the surveillance camera video, at the surveillance camera itself or at an intermediate server installed between the surveillance camera and the search system), and the feature and the flag are encrypted and registered in the search system. The search system first narrows down target data by secure computation using the ciphertext of the flag, and performs data search by secure computation using the ciphertext of the feature of the narrowed-down target data. In the data search using the feature, it is necessary to calculate the similarity between the features, but the narrowing using the flag only compares the values. Therefore, if the target data is narrowed down using the flag first, the processing cost in the entire data search can be reduced. For example, if a flag representing the gender of the human figure shown in each of the search target data and the search condition data is generated, and the search using the feature is performed after narrowing down by the gender, the processing cost can be reduced by about 50%.

Hereinafter, an embodiment of the present invention will be described in detail. In the drawings, constituents having the same functions are denoted by the same reference numerals, and redundant description will be omitted.

### [Embodiment]

An embodiment of the present invention is secure search system and method for searching, from the stored search target data, for the data similar to data input as a search condition by secure computation while keeping each data secret. In the present embodiment, such a usage is assumed as image data included in surveillance camera videos captured by a surveillance camera is a search target, image data in which a specific person appears is a search condition, and, from the stored search target image data, image data in which a person appearing in the image data of the search condition is included is output as a search result. However, the data to be searched in the present invention is not limited to image data. Any type of data can be a search target as long as it is data from which certain feature can be extracted, such as voice data and text data for example.

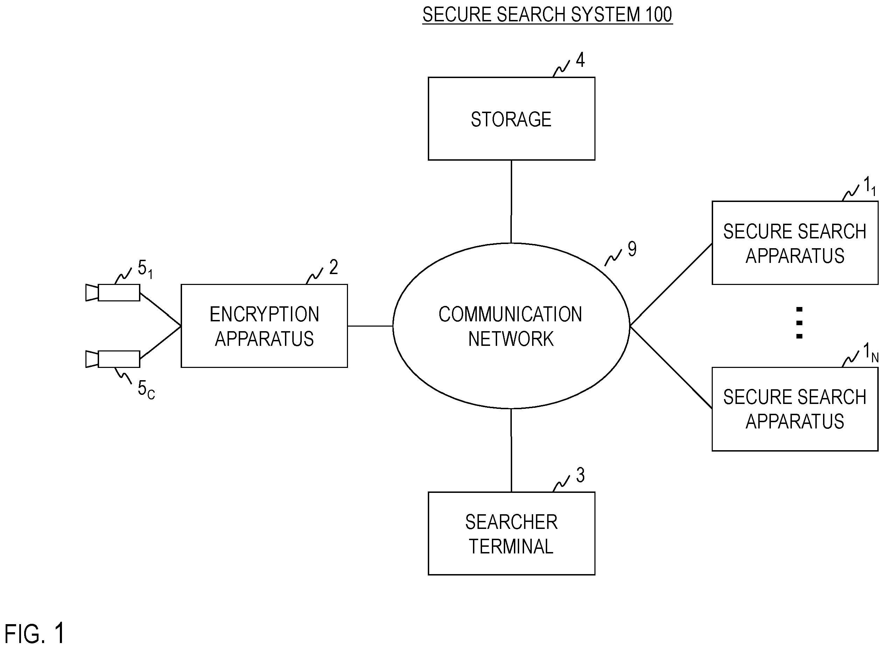

As illustrated in Fig. 1, a secure search system 100 of the embodiment includes N (≥ 1) secure search apparatuses 1₁, ..., 1_{N}, an encryption apparatus 2, a searcher terminal 3, and a storage **4.** A plurality of encryption apparatuses 2 and a plurality of searcher terminals 3 may be included. To the encryption apparatus 2, C (≥ 1) surveillance cameras 5₁, ..., 5_{C} are connected by a wired or wireless interface. When a plurality of encryption apparatuses 2 are included, the number C of surveillance cameras 5_{c} (c ∈ = 1, ..., C) connected to each encryption apparatus 2 may be different from each other. The storage 4 can be omitted by implementing its function in any one of the secure search apparatuses 1₁, ..., 1_{N}.

Each of the secure search apparatuses 1₁, ..., 1_{N}, the encryption apparatus 2, the searcher terminal 3, and the storage 4 is connected to a communication network 9. The communication network 9 is a circuit-switching or packet-switching communication network configured such that the connected apparatuses can perform communicate each other, and for example, the Internet, a local area network (LAN), a wide area network (WAN), or the like can be used.

In case there are a plurality of secure search apparatuses 1ₙ (n ∈ {1, ..., N}) (that is, when N ≥ 2,), the secure search apparatus 1ₙ performs a search in cooperation with another secure search apparatus 1_{n'} (n'∈ {1,..., N} and n ≠ n') using a secure computation method based on secret sharing such as Shamir's Secret Sharing or replicated secret sharing. In case there is one secure search apparatus 1ₙ (that is, when N = 1), the secure search apparatus 1ₙ performs a search using a secure computation method based on encryption such as homomorphic encryption.

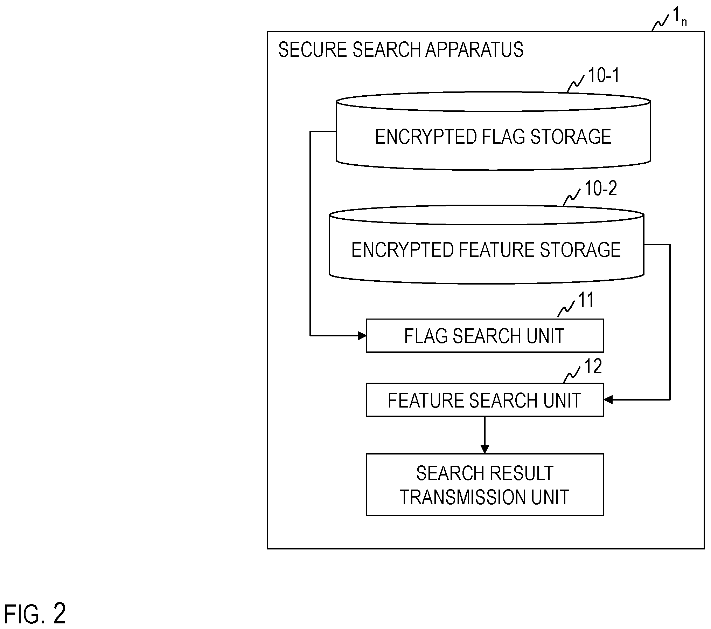

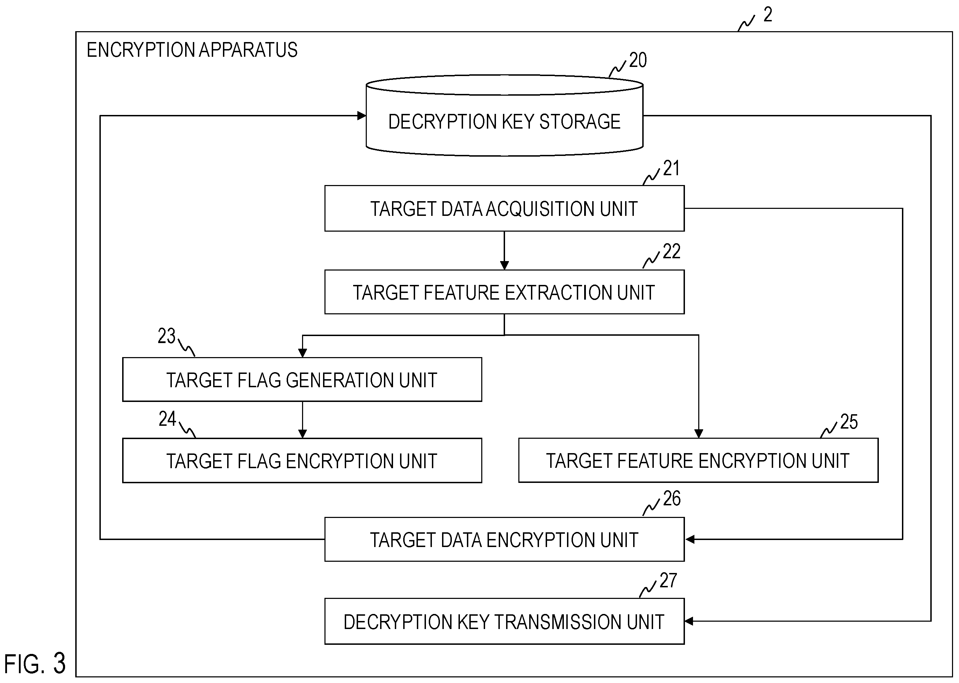

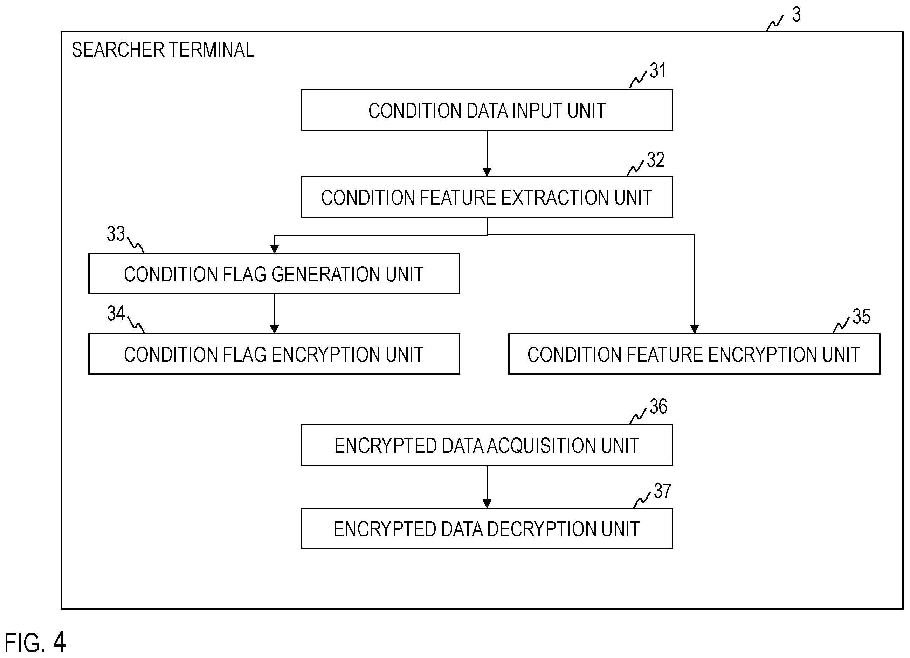

For example, as illustrated in Fig. 2, the secure search apparatus 1ₙ (n = 1, ..., N) includes an encrypted flag storage 10-1, an encrypted feature storage 10-2, a flag search unit 11, a feature search unit 12, and a search result transmission unit 13. For example, as illustrated in Fig. 3, the encryption apparatus 2 includes a decryption key storage 20, a target data acquisition unit 21, a target feature extraction unit 22, a target flag generation unit 23, a target flag encryption unit 24, a target feature encryption unit 25, a target data encryption unit 26, and a decryption key transmission unit 27. For example, as illustrated in Fig. 4, the searcher terminal 3 includes a condition data input unit 31, a condition feature extraction unit 32, a condition flag generation unit 33, a condition flag encryption unit 34, a condition feature encryption unit 35, an encrypted data acquisition unit 36, and an encrypted data decryption unit 37.

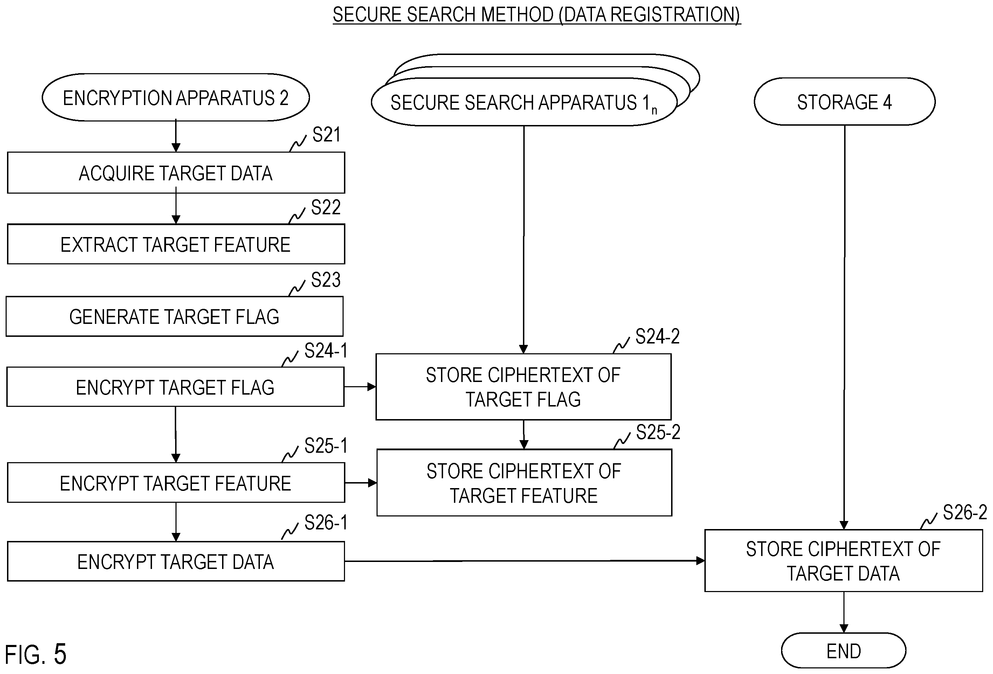

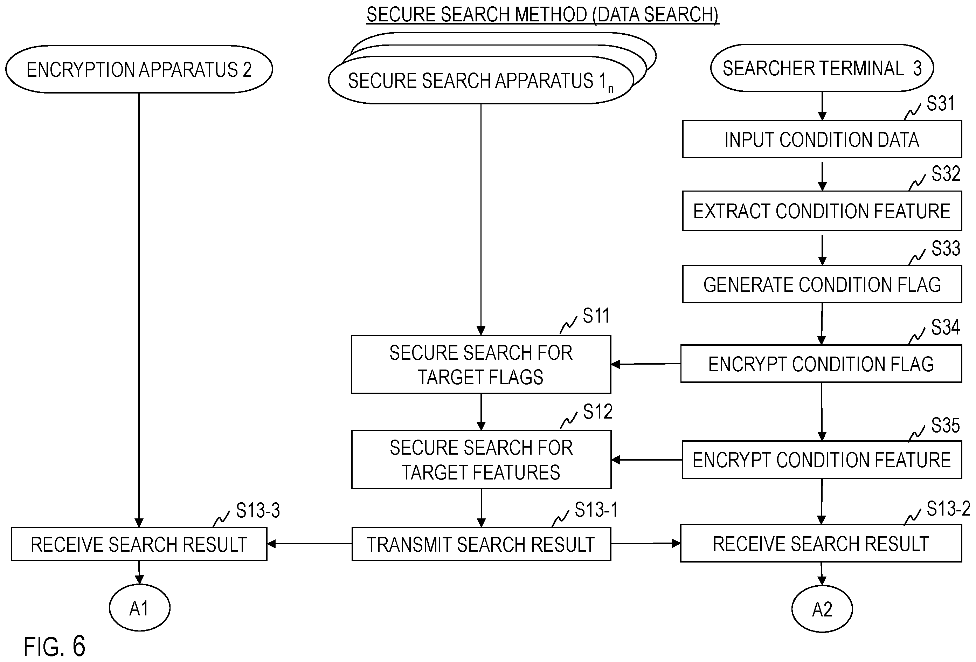

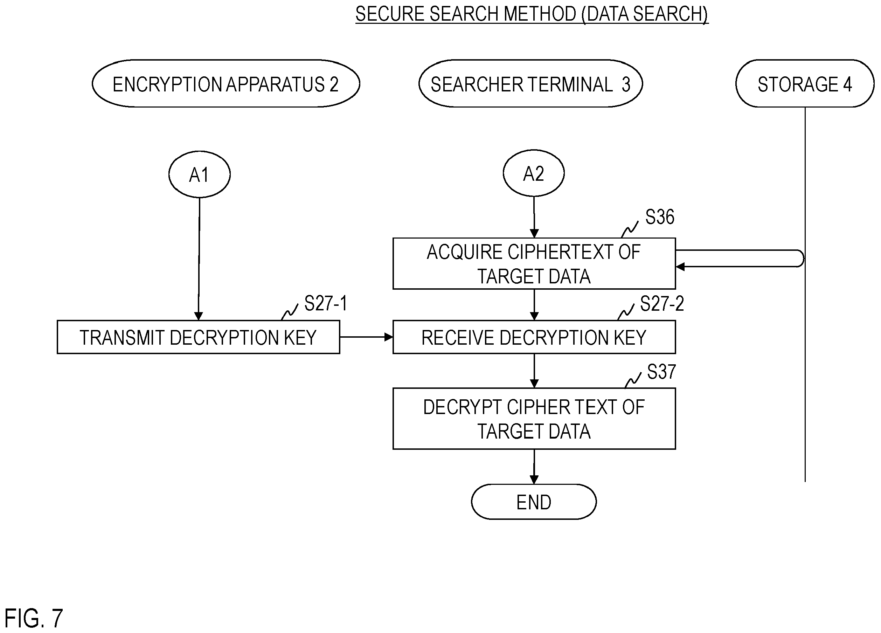

The secure search apparatuses 1₁, ..., 1_{N}, the encryption apparatus 2, the searcher terminal 3, and the storage 4 included in the secure search system 100 perform the processing of each step illustrated in Figs. 5 to 7 in cooperation with each other, thereby implementing the secure search method of the embodiment. The secure search method of the embodiment includes two stages, data registration processing where search target is registered in the secure search system 100, and data search processing where data similar to the search condition data is searched from search target data by secure computation. Fig. 5 is a flowchart illustrating a procedure of data registration processing, and Figs. 6 and 7 is a flowchart illustrating a procedure of data search processing. The circular blocks denoted by A1 and A2 illustrated in Fig. 6 indicate that the processing continues on the circular blocks denoted by A1 and A2 illustrated in Fig. 7.

Each apparatus or terminal included in the secure search system 100 is a special apparatus configured such that a special program is read by a known or dedicated computer including, for example, a central processing unit (CPU), a main storage (random access memory (RAM)), and the like. For example, each apparatus or terminal executes each processing under a control of the central processing unit. The data which is input to each apparatus or terminal or the data obtained by each processing is stored in, for example, the main storage. The data stored in the main storage is read to the central processing unit, and is used for another processing as necessary. At least some of processing units of each apparatus or terminal may be configured by hardware such as an integrated circuit. Each storage included in each apparatus or terminal may include, for example, a main storage such as a random access memory (RAM), an auxiliary storage including a hard disk, an optical disc, or a semiconductor memory element such as a flash memory, or middleware such as a relational database or a key value store.

The secure search apparatus 1ₙ and the encryption apparatus 2 are, to be specific, information processing apparatuses having a data communication function such as a tower type or rack mount type server computer. The searcher terminal 3 is, to be specific, an information processing apparatus having a data communication function such as a desktop or laptop personal computer, or a mobile terminal such as a smartphone or a tablet. The storage 4 is, to be specific, an information processing apparatus having a data communication function and a data storage function such as a tower type or rack mount type server computer to which a mass storage is connected or a network connected storage incorporating a mass storage.

The surveillance camera 5_{c} is, for example, an imaging apparatus including a video camera that captures a moving image of a person or an object as a subject. There are no limitations on functions that the surveillance camera 5_{c} should have, such as available resolutions, a recording medium for a video, with or without a microphone, digital recording or analog recording. In general, any imaging apparatus can be used as long as the imaging apparatus can capture a moving image.

A processing procedure at the time of data registration in the secure search method performed by the secure search system 100 according to the embodiment will be described with reference to Fig. 5.

In step S21, the target data acquisition unit 21 of the encryption apparatus 2 acquires data to be searched (hereinafter, referred to as "target data"). The target data is, for example, image data included in the surveillance camera video captured by the surveillance camera 5_{c}. Here, information such as a capturing place and a capturing date and time may be tagged to the target data. The target data acquisition unit 21 outputs the acquired target data to the target feature extraction unit 22 and the target data encryption unit 26.

In step S22, the target feature extraction unit 22 of the encryption apparatus 2 receives the target data from the target data acquisition unit 21 and extracts a feature (hereinafter, referred to as "target feature ") from the target data. The target feature extraction unit 22 outputs the extracted target feature to the target flag generation unit 23 and the target feature encryption unit 25.

The method of extracting the feature can be arbitrarily determined according to the type of the target data. For example, in case such a use scene is assumed as the target data is image data included in a video in which an unspecified number of people are captured, and a face of a specific person is searched for from the target data, the feature may be extracted in the following two steps.
First, regions to be searched (for example, the faces of humans) are extracted from image data captured by the surveillance camera 5_{c} (step 1). For the region extraction, for example, a general method such as principal component analysis may be used (see Reference Document 1). Next, the extracted face image data are converted into features (step 2). In the feature conversion of the face image data, for example, the pixel value of each pixel of the image may be adopted as it is as the feature, or the change of each pixel may be adopted as the feature using a general edge extraction method (see Reference Document 2).

[Reference Document 1] Mante Opel, "Facial recognition using principal component analysis", [online], [retrieved on March 9, 2020], Internet <URL: https://qiita.com/manteopel/items/703e9946e1903c6e2aa3>
[Reference Document 2] SUNSHINE, "Feature" of "image recognition" (2): Summarized are What is "edge detection"? What kind of mechanism? What is a "spatial filter"? How is it used?", [online], [retrieved on March 9, 2020], Internet <URL: https://it-mint.com/2018/11/05/feature-value-in-image-recognition-whats-edge-detection-and-spatial-filter-1839.html>

In case the target data is voice data, a known acoustic feature may be extracted. In case the target data is text data, a feature such as a known word embedding vector may be extracted.

In step S23, the target flag generation unit 23 of the encryption apparatus 2 receives the target feature from the target feature extraction unit 22, and generates a flag (hereinafter, referred to as "target flag") representing the attribute of the target data on the basis of the target feature. The target flag generation unit 23 outputs the generated target flag to the target flag encryption unit 24.

The method of generating the flag can be arbitrarily determined according to the type of the target data. For example, in case it is assumed that target data is image data included in a video in which a large number of unspecified persons are captured, and the target data is narrowed down according to the gender and the age of the person, an attribute flag indicating the gender and the age may be generated as follows. First, a face image is extracted from target data. Next, for example, the gender and the age are estimated from the face image by the method described in Reference Document 3. Then, the estimated gender and age are converted into codes representing the gender and the age (for example, 1 for male and 0 for female in the case of gender, and 20 for age between 20 and 29 years old and 30 for age between 30 and 39 years old in the case of age).
[Reference Document 3] Kyoko Izumi, Ryota Iga, Hisanori Hayashi, Gentaro Fukano, Tetsuya Otani, "A Gender and Age Estimation Algorithm from Several Features of Face Image", The Information Processing Society of Japan 65th National Convention, 2003

In step S24-1, the target flag encryption unit 24 of the encryption apparatus 2 receives the target flag from the target flag generation unit 23 and encrypts the target flag. The target flag encryption unit 24 encrypts the target flag using any encryption method or secret sharing method capable of secure computation. Specifically, examples of the encryption method capable of secure computation include homomorphic encryption, and examples of the secret sharing method capable of secure computation include Shamir's Secret Sharing and replicated secret sharing. The generated ciphertext is one ciphertext in the case of the encryption method, and are split values consisting of a plurality of shares in the case of the secret sharing method. The target flag encryption unit 24 transmits the ciphertext of the target flag to each secure search apparatus 1ₙ. Here, "transmitting the ciphertext to each secure search apparatus 1ₙ" means transmitting one ciphertext to one secure search apparatus 1₁ if the ciphertext is in an encryption method, and distributing the split values so that each of the plurality of secure search apparatuses 1₁, ..., 1_{N} holds one share without overlapping if the ciphertext is in a secret sharing method. The same applies to the following description.

In step S24-2, each secure search apparatus 1ₙ receives the ciphertext of the target flag from the encryption apparatus 2 and stores the ciphertext of the target flag in the encrypted flag storage 10-1.

In step S25-1, the target feature encryption unit 25 of the encryption apparatus 2 receives the target feature from the target feature extraction unit 22 and encrypts the target feature. The encryption method used by the target feature encryption unit 25 is similar to the encryption method used by the target flag encryption unit 24 of the encryption apparatus 2. The target feature encryption unit 25 transmits the ciphertext of the target feature to each secure search apparatus 1ₙ.

In step S25-2, each secure search apparatus 1ₙ receives the ciphertext of the target feature from the encryption apparatus 2 and stores the ciphertext of the target feature in the encrypted feature storage 10-2.

In step S26-1, the target data encryption unit 26 of the encryption apparatus 2 receives the target data from the target data acquisition unit 21 and encrypts the target data. The encryption method used by the target data encryption unit 26 is an encryption method different from the encryption method used by the target flag encryption unit 24 and the target feature encryption unit 25, and is an encryption method in which original data cannot be obtained unless a valid decryption key is used. Such an encryption method may be common key encryption or public key encryption. The target data encryption unit 26 associates information indicating the ciphertext of the target data with information indicating a decryption key necessary for decrypting the ciphertext of the target data, and stores the information in the decryption key storage 20. The information indicating the decryption key may be the decryption key itself or may be information that can identify the decryption key exchanged in advance between the encryption apparatus 2 and the searcher terminal 3 by a secure method. The target data encryption unit 26 transmits the ciphertext of the target data to the storage 4.

In step S26-2, the storage 4 receives the ciphertext of the target data from the encryption apparatus 2 and stores the ciphertext of the target data.

A processing procedure at the time of data search in the secure search method performed by the secure search system 100 according to the embodiment will be described with reference to Figs. 6 and 7.

In step S31, the condition data input unit 31 of the searcher terminal 3 acquires data (hereinafter, referred to as "condition data") as a search condition input to the searcher terminal 3 by the searcher using the searcher terminal 3. The condition data is, for example, image data in which a face of a person to be searched is captured. The condition data input unit 31 outputs the acquired condition data to the condition feature extraction unit 32.

In step S32, the condition feature extraction unit 32 of the searcher terminal 3 receives condition data from the condition data input unit 31 and extracts a feature (hereinafter, referred to as a "condition feature") from the condition data. The feature extracted by the condition feature extraction unit 32 is similar to the feature extracted by the target feature extraction unit 22 of the encryption apparatus 2. The condition feature extraction unit 32 outputs the extracted condition feature to the condition flag generation unit 33 and the condition feature encryption unit 35.

In step S33, the condition flag generation unit 33 of the searcher terminal 3 receives the condition feature from the condition feature extraction unit 32, and generates a flag (hereinafter, referred to as "condition flag") representing the attribute of the condition data on the basis of the condition feature. The flag generation method used by the condition flag generation unit 33 is similar to the flag generation method used by the target flag generation unit 23 of the encryption apparatus 2. The condition flag generation unit 33 outputs the generated condition flag to the condition flag encryption unit 34.

In step S34, the condition flag encryption unit 34 of the searcher terminal 3 receives the condition flag from the condition flag generation unit 33 and encrypts the condition flag. The encryption method used by the condition flag encryption unit 34 is similar to the encryption method used by the target flag encryption unit 24 of the encryption apparatus 2. The condition flag encryption unit 34 transmits the ciphertext of the condition flag to each secure search apparatus 1ₙ.

In step S35, the condition feature encryption unit 35 of the searcher terminal 3 receives the condition feature from the condition feature extraction unit 32 and encrypts the condition feature. The encryption method used by the condition feature encryption unit 35 is similar to the encryption method used by the target feature encryption unit 25 of the encryption apparatus 2. The condition feature encryption unit 35 transmits the ciphertext of the condition feature to each secure search apparatus 1ₙ.

In step S11, the flag search unit 11 of each secure search apparatus 1ₙ receives the ciphertext of the condition flag from the searcher terminal 3, and searches for the target flag matching the condition flag by secure computation using the ciphertext of the target flag stored in the encrypted flag storage 10-1 and the ciphertext of the condition flag received from the searcher terminal 3. That is, the ciphertext of the target flag matching the condition flag is extracted while keeping the target flag and the condition flag secret. The flag search unit 11 reads the ciphertext of the target feature corresponding to the extracted ciphertext of the target flag from the encrypted feature storage 10-2, and outputs information (hereinafter, referred to as an "intermediate search result") indicating the ciphertext of the target feature to the feature search unit 12.

The flag search by secure computation can be achieved by storing the target flag and the condition flag in a table format and then encrypting the target flag and the condition flag by an encryption method capable of secure computation, and performing filtering processing (comparison operation) using secure computation described in, for example, Reference Document 4.
[Reference Document 4] Koki Hamada, Dai Ikarashi, Ryo Kikuchi, Koji Chida, Gembu Morohashi, Hitoshi Fuji, Katsumi Takahashi, "MEVAL: A Practically Efficient System for Secure Multi-Party Statistical Analysis", Computer Security Symposium (CSS), 2013

In step S12, the feature search unit 12 of each secure search apparatus 1ₙ receives the intermediate search result from the flag search unit 11, and searches for the target feature similar to the condition feature by secure computation using the ciphertext of the target feature included in the intermediate search result and the ciphertext of the condition feature received from the searcher terminal 3. That is, the ciphertext of the target feature similar to the condition feature is extracted while keeping the target feature and the condition feature secret. The feature search unit 12 outputs information (hereinafter, referred to as a "search result") indicating the ciphertext of the target data corresponding to the extracted ciphertext of the target feature to the search result transmission unit 13.

The feature search by the secure computation can be performed by calculating Euclidean distances between the condition data and all the target data and comparing the calculation result with a predetermined threshold using secure computation. The Euclidean distance is calculated as follows. It is assumed that the data to be searched (target data) and the search data (condition data) are image data of n × m pixels. When the pixel values of the data to be searched (feature) is x = [xᵢⱼ] and the pixel values of the search data are y = [yᵢⱼ] (i = 1,..., m, j = 1,..., n), the Euclidean distance D is expressed by the following formula (see Reference Document 5).$D = \sqrt{{\sum }_{i = 1}^{m} {\sum }_{j = 1}^{n} {\left({x}_{ij}-{y}_{ij}\right)}^{2}}$
[Reference Document 5] Kohei Inoue, Kiichi Urahama, "Filtering Method for Image Retrieval Based on Lower Bound of Euclidean Distance", Journal of The Institute of Image Information and Television Engineers, Vol. 59, No. 11, pp. 1701-1704, 2005

The secure computation of the Euclidean distance D can be easily achieved by utilizing the secure computation having the additive homomorphism.

A search result can be generated by calculating the Euclidean distance D for all target data and comparing the calculation result with a predetermined threshold. For example, target data whose Euclidean distance D are equal to or less than a predetermined threshold, or a predetermined number of pieces of target data from the head when the Euclidean distance D is sorted in ascending order may be output as the search result. For the sort computation on the secure computation, for example, the method described in Reference Document 6 can be used.
[Reference Document 6] Dai Ikarashi, Koki Hamada, Ryo Kikuchi, Koji Chida, "A Design and an Implementation of Super-High-Speed Multi-Party Sorting: The Day When Multi-Party Computation Reaches Scripting Languages", Computer Security Symposium (CSS), 2017

In step S13-1, the search result transmission unit 13 of each secure search apparatus 1ₙ receives the search result from the feature search unit 12 and transmits the search result to the searcher terminal 3. In addition, the search result transmission unit 13 transmits the search result and information indicating the searcher terminal 3 to the encryption apparatus 2.

In step S13-2, the searcher terminal 3 receives the search result from each secure search apparatus 1ₙ and obtains information indicating the ciphertext of the target data from the search result. In case the feature search unit 12 performs a search by a secure computation method based on secret sharing, information indicating the ciphertext of the target data may be obtained by restoring the share of the search result received from each secure search apparatus 1ₙ. In case the feature search unit 12 performs a search by a secure computation method based on encryption, information indicating the ciphertext of the target data may be obtained by decrypting the search result received from the secure search apparatus 1₁ according to a predetermined decryption method. The searcher terminal 3 inputs obtained information indicating the ciphertext of the target data to the encrypted data acquisition unit 37.

In step S13-3, the encryption apparatus 2 receives the search result and the information indicating the searcher terminal 3 from each secure search apparatus 1ₙ, and obtains information indicating the ciphertext of the target data from the search result, similarly to the searcher terminal 3. The encryption apparatus 2 inputs obtained information indicating the ciphertext of the target data and information indicating the searcher terminal 3 to the decryption key transmission unit 27.

In step S36, the encrypted data acquisition unit 36 of the searcher terminal 3 acquires the ciphertext of the target data indicated by the input information from the storage 4. The encrypted data acquisition unit 36 outputs the acquired ciphertext of the target data to the encrypted data decryption unit 37.

In step S27-1, the decryption key transmission unit 27 of the encryption apparatus 2 acquires, from the decryption key storage 20, information indicating a decryption key for decrypting the ciphertext of the target data indicated by the input information. The decryption key transmission unit 27 transmits acquired information indicating the decryption key to the searcher terminal 3.

In step S27-2, the searcher terminal 3 receives information indicating a decryption key from the encryption apparatus 2 and acquires the decryption key. The searcher terminal 3 inputs the acquired decryption key to the encrypted data decryption unit 37.

In step S37, the encrypted data decryption unit 37 of the searcher terminal 3 receives the ciphertext of the target data from the encrypted data acquisition unit 36, and decrypts the ciphertext of the target data using the input decryption key. The encrypted data decryption unit 37 outputs the original target data obtained by decryption. In case the target data acquisition unit 21 has tagged information such as a capturing place and a capturing date and time to the target data, such information may be added to the output target data.

With the above configuration, the secure search apparatuses 1₁,..., and 1_{N} narrow down the target data to the data having the same flag representing the attribute, and search the narrowed down data using only the feature, and thus, it is possible to reduce the computation cost of the data search by the secure computation. In addition, the searcher terminal 3 can acquire, as the search result, original data itself that is similar to the search condition data among the pieces of target data. Here, since the original data is encrypted by an encryption method that cannot be decrypted without a decryption key, information regarding the original data is not leaked to the secure search apparatuses 1₁,..., 1_{N}. Therefore, the original data can be safely provided to the searcher terminal as the search result.

### [Modification]

In the secure search system of the embodiment, the encryption apparatus 2 extracts a feature from each of image data captured by the plurality of surveillance cameras 5₁, ..., 5_{C}, encrypts the feature and the original image data, and stores the encrypted feature and the original image data so as to be usable from the secure computation apparatuses 1₁, ..., 1_{N}. However, the encryption apparatus 2 can be omitted by implementing the feature extraction and encryption functions in the surveillance cameras 5₁, ..., 5_{C} themselves. In this case, the surveillance cameras 5₁, ..., 5_{C} include the decryption key storage 20, the target feature extraction unit 22, the target flag generation unit 23, the target flag encryption unit 24, the target feature encryption unit 25, the target data encryption unit 26, and the decryption key transmission unit 27 included in the encryption apparatus 2 of the embodiment. That is, in the secure search system of the modification, each of the surveillance cameras 5₁, ..., 5_{C} is configured to correspond to the encryption apparatus 2.

While the embodiment of the present invention has been described above, a specific configuration is not limited to the embodiment. The various processes described in the embodiments may be executed not only in chronological order according to the described order, but also in parallel or individually according to the processing capability of an apparatus that executes the processes or as necessary.

### [Program and Recording Medium]

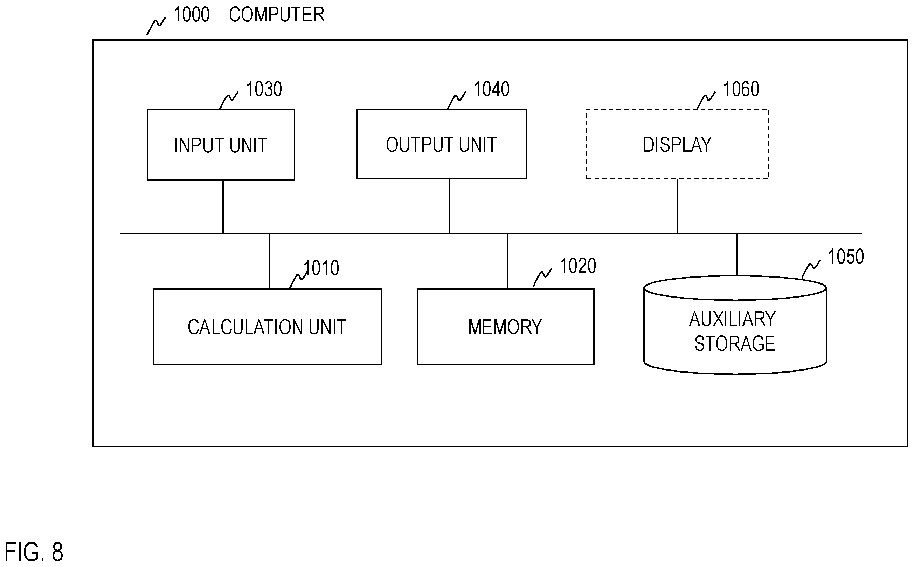

In case various types of processing functions in each apparatus described in the embodiment are implemented by a computer, processing content of the functions of each apparatus is described by a program. By causing a memory1020 of a computer illustrated in Fig. 8 to read this program and causing a calculation unit 1010, an input unit 1030, an output unit 1040, and the like to execute the program, various kinds of processing functions in each of the apparatuses are implemented on the computer.

The program describing the processing content may be recorded on a computer-readable recording medium. The computer-readable recording medium is, for example, a non-transitory recording medium, and is a magnetic recording apparatus, an optical disc, or the like.

Distribution of the program is performed by, for example, selling, transferring, or renting a portable recording medium such as a DVD or a CD-ROM on which the program is recorded. Further, a configuration in which the program is stored in a storage in a server computer and the program is distributed by transferring the program from the server computer to other computers via a network may also be employed.

For example, the computer that executes such a program first temporarily stores the program recorded in a portable recording medium or the program transferred from the server computer in an auxiliary storage 1050 that is a non-transitory storage of the computer. In addition, when executing processing, the computer reads the program stored in the auxiliary storage 1050 that is a non-transitory storage apparatus of the computer, into the memory 1020 that is a temporary storage, and executes processing according to the read program. Further, as another embodiment of the program, a computer may directly read the program from a portable recording medium and execute processing according to the program, and a computer may sequentially execute processing according to the received program each time the program is transferred from a server computer to the computer. Further, the above-described processing may be executed by a so-called application service provider (ASP) type service that implements a processing function only by an execution instruction and result acquisition without transferring the program from the server computer to the computer. The program according to the present embodiment includes information used for a process by an electronic computer and equivalent to the program (data or the like that is not a direct command to the computer but has a property that defines a process of the computer).

Although the various apparatuses described in the embodiment are configured by executing a predetermined program on a computer in the description above, at least part of the processing content may be implemented by hardware.

## Claims

1. A secure search method performed by a secure search system including at least one secure search apparatus, an encryption apparatus, and a searcher terminal, the secure search method comprising:
extracting (S22) a target feature by converting a target data that is a search target and encrypting (S25-1) the target feature which represents the target data by a target feature encryption unit of the encryption apparatus;
encrypting (S24-1) a target flag representing an attribute of the target data by a target flag encryption unit of the encryption apparatus;
extracting (S32) a condition feature by converting a condition data that is a search condition and encrypting (S35) the condition feature which represents the condition data by a condition feature encryption unit of the searcher terminal;
encrypting (S34) a condition flag representing an attribute of the condition data by a condition flag encryption unit of the searcher terminal;
acquiring (S11) an intermediate search result indicating a ciphertext of the target feature corresponding to the target flag matching the condition flag while keeping the target flag and the condition flag secret using a ciphertext of the target flag and a ciphertext of the condition flag, by a flag search unit of the secure search apparatus; and
acquiring (S11) a search result indicating the ciphertext of the target data corresponding to the target feature similar to the condition feature while keeping the target feature and the condition feature secret using the ciphertext of the target feature indicated by the intermediate search result and a ciphertext of the condition feature by a feature search unit of the secure search apparatus,
wherein the ciphertext of the target feature and the ciphertext of the condition feature are encrypted by a first encryption method capable of secure computation, and
wherein the method further comprises:
encrypting (S26-1) the target data using a second encryption method that is different from the first encryption method and requires a decryption key for decryption by a target data encryption unit of the encryption apparatus;
transmitting (S27-1) information indicating the decryption key for decrypting the ciphertext of the target data indicated by the search result to the searcher terminal by a decryption key transmission unit of the encryption apparatus; and
decrypting (S37) the ciphertext of the target data indicated by the search result using the decryption key to acquire original target data by an encrypted data decryption unit of the searcher terminal.

2. The secure search method according to claim 1,
wherein the target data is image data included in a video captured by a surveillance camera,
the condition data is image data in which a face of a specific person is captured,
the target flag represents an attribute of a person appearing in the target data, and
the condition flag represents an attribute of a person appearing in the condition data.

3. A secure search system (100) comprising at least one secure search apparatus (1₁, ..., 1_{N}), an encryption apparatus (2), and a searcher terminal (3),
the encryption apparatus (2) including
a target feature encryption unit (25) that extracts a target feature by converting a target data that is a search target and encrypts the target feature which represents the target data and
a target flag encryption unit (24) that encrypts a target flag representing an attribute of the target data,
the searcher terminal (3) including
a condition feature encryption unit (35) that extracts a condition feature by converting a condition data that is a search condition and encrypts the condition feature which represents the condition data and
a condition flag encryption unit (34) that encrypts a condition flag representing an attribute of the condition data,
the secure search apparatus (1₁, ..., 1_{N}) including
a flag search unit (11) that acquires an intermediate search result indicating a ciphertext of the target feature corresponding to the target flag matching the condition flag while keeping the target flag and the condition flag secret using a ciphertext of the target flag and a ciphertext of the condition flag and
a feature search unit (12) that acquires a search result indicating the ciphertext of the target data corresponding to the target feature similar to the condition feature while keeping the target feature and the condition feature secret using the ciphertext of the target feature indicated by the intermediate search result and a ciphertext of the condition feature,
wherein the ciphertext of the target feature and the ciphertext of the condition feature are encrypted by a first encryption method capable of secure computation, and
wherein the encryption apparatus (2) further includes:
a target data encryption unit (26) that encrypts the target data using a second encryption method that is different from the first encryption method and requires a decryption key for decryption; and
a decryption key transmission unit (27) that transmits information indicating the decryption key for decrypting the ciphertext of the target data indicated by the search result to the searcher terminal (3), and
wherein the searcher terminal (3) further includes: an encrypted data decryption unit (37) that decrypts the ciphertext of the target data indicated by the search result using the decryption key to acquire original target data.

4. The secure search apparatus (1₁, ..., 1_{N}) used in the secure search system (100) according to claim 3.

5. The encryption apparatus (2) used in the secure search system (100) according to claim 3.

6. The searcher terminal (3) used in the secure search system (100) according to claim 3.

7. A program for causing a computer to execute each step of the secure search method according to any one of claims 1 to 2.

## Patentansprüche

1. Verfahren zur sicheren Suche, das von einem System zur sicheren Suche durchgeführt wird, das mindestens eine Vorrichtung zur sicheren Suche, eine Verschlüsselungsvorrichtung und ein Such-Endgerät enthält, wobei das Verfahren zur sicheren Suche Folgendes aufweist:
Extrahieren (S22) eines Zielmerkmals durch Umwandeln von Zieldaten, die ein Suchziel sind, und Verschlüsseln (S25-1) des Zielmerkmals, das die Zieldaten repräsentiert, durch eine Zielmerkmalverschlüsselungseinheit der Verschlüsselungsvorrichtung;
Verschlüsseln (S24-1) eines Zielflags, das ein Attribut der Zieldaten repräsentiert, durch eine Zielflagverschlüsselungseinheit der Verschlüsselungsvorrichtung;
Extrahieren (S32) eines Bedingungsmerkmals durch Umwandeln von Bedingungsdaten, die eine Suchbedingung sind, und Verschlüsseln (S35) des Bedingungsmerkmals, das die Bedingungsdaten repräsentiert, durch eine Bedingungsmerkmalverschlüsselungseinheit des Such-Endgeräts;
Verschlüsseln (S34) eines Bedingungsflags, das ein Attribut der Bedingungsdaten repräsentiert, durch eine Bedingungsflagverschlüsselungseinheit des Such-Endgeräts;
Erfassen (S11) eines Zwischensuchergebnisses, das einen Chiffretext des Zielmerkmals anzeigt, der dem Zielflag entspricht, das mit dem Bedingungsflag übereinstimmt, während das Zielflag und das Bedingungsflag geheim gehalten werden, unter Verwendung eines Chiffretexts des Zielflags und eines Chiffretexts des Bedingungsflags durch eine Flagsucheinheit der Vorrichtung zur sicheren Suche; und
Erfassen (S11) eines Suchergebnisses, das den Chiffretext der Zieldaten anzeigt, der dem Zielmerkmal entspricht, das dem Bedingungsmerkmal ähnlich ist, während das Zielmerkmal und das Bedingungsmerkmal geheim gehalten werden, unter Verwendung des Chiffretexts des Zielmerkmals, der durch das Zwischensuchergebnis angezeigt wird, und eines Chiffretexts des Bedingungsmerkmals durch eine Merkmalssucheinheit der Vorrichtung zur sicheren Suche,
wobei der Chiffretext des Zielmerkmals und der Chiffretext des Bedingungsmerkmals durch ein erstes Verschlüsselungsverfahren verschlüsselt werden, das zu einer sicheren Berechnung in der Lage ist, und
wobei das Verfahren ferner Folgendes aufweist:
Verschlüsseln (S26-1) der Zieldaten unter Verwendung eines zweiten Verschlüsselungsverfahrens, das sich von dem ersten Verschlüsselungsverfahren unterscheidet und einen Entschlüsselungsschlüssel zur Entschlüsselung durch eine Zieldatenverschlüsselungseinheit der Verschlüsselungsvorrichtung erfordert;
Übertragen (S27-1) von Informationen, die den Entschlüsselungsschlüssel zum Entschlüsseln des Chiffretexts der Zieldaten anzeigen, der durch das Suchergebnis angezeigt wird, an das Such-Endgerät durch eine Entschlüsselungsschlüsselübertragungseinheit der Verschlüsselungsvorrichtung; und
Entschlüsseln (S37) des Chiffretexts der Zieldaten, der durch das Suchergebnis angezeigt wird, unter Verwendung des Entschlüsselungsschlüssels dazu, ursprüngliche Zieldaten durch eine Entschlüsselungseinheit des Such-Endgeräts für verschlüsselte Daten zu erfassen.

2. Verfahren zur sicheren Suche nach Anspruch 1,
wobei die Zieldaten Bilddaten sind, die in einem Video enthalten sind, das von einer Überwachungskamera aufgenommen wird,
die Bedingungsdaten Bilddaten sind, in denen ein Gesicht einer spezifischen Person aufgenommen wird,
das Zielflag ein Attribut einer Person repräsentiert, die in den Zieldaten erscheint, und
das Bedingungsflag ein Attribut einer Person repräsentiert, die in den Bedingungsdaten erscheint.

3. System (100) zur sicheren Suche, das mindestens eine Vorrichtung (1₁, ..., 1_{N}) zur sicheren Suche, eine Verschlüsselungsvorrichtung (2) und ein Such-Endgerät (3) aufweist,
wobei die Verschlüsselungsvorrichtung (2) Folgendes enthält:
eine Zielmerkmalverschlüsselungseinheit (25), die ein Zielmerkmal durch Umwandeln von Zieldaten extrahiert, die ein Suchziel sind, und das Zielmerkmal verschlüsselt, das die Zieldaten repräsentiert, und
eine Zielflagverschlüsselungseinheit (24), die ein Zielflag verschlüsselt, das ein Attribut der Zieldaten repräsentiert,
wobei das Such-Endgerät (3) Folgendes enthält:
eine Bedingungsmerkmalverschlüsselungseinheit (35), die ein Bedingungsmerkmal durch Umwandeln von Bedingungsdaten extrahiert, die eine Suchbedingung sind, und das Bedingungsmerkmal verschlüsselt, das die Bedingungsdaten repräsentiert, und
eine Bedingungsflagverschlüsselungseinheit (34), die ein Bedingungsflag verschlüsselt, das ein Attribut der Bedingungsdaten repräsentiert,
wobei die Vorrichtung zur sicheren Suche (1₁, ..., 1_{N}) Folgendes enthält:
eine Flagsucheinheit (11), die ein Zwischensuchergebnis erfasst, das einen Chiffretext des Zielmerkmals anzeigt, der dem Zielflag entspricht, das mit dem Bedingungsflag übereinstimmt, während das Zielflag und das Bedingungsflag geheim gehalten werden, unter Verwendung eines Chiffretexts des Zielflags und eines Chiffretexts des Bedingungsflags, und
eine Merkmalssucheinheit (12), die ein Suchergebnis, das den Chiffretext der Zieldaten anzeigt, der dem Zielmerkmal entspricht, das dem Bedingungsmerkmal ähnlich ist, während das Zielmerkmal und das Bedingungsmerkmal geheim gehalten werden, unter Verwendung des Chiffretexts des Zielmerkmals, der durch das Zwischensuchergebnis angezeigt wird, und eines Chiffretexts des Bedingungsmerkmals erfasst,
wobei der Chiffretext des Zielmerkmals und der Chiffretext des Bedingungsmerkmals durch ein erstes Verschlüsselungsverfahren verschlüsselt werden, das zu einer sicheren Berechnung in der Lage ist, und
wobei die Verschlüsselungsvorrichtung (2) ferner Folgendes enthält:
eine Zieldatenverschlüsselungseinheit (26), welche die Zieldaten unter Verwendung eines zweiten Verschlüsselungsverfahrens verschlüsselt, das sich von dem ersten Verschlüsselungsverfahren unterscheidet und einen Entschlüsselungsschlüssel zur Entschlüsselung erfordert; und
eine Entschlüsselungsschlüsselübertragungseinheit (27), die Informationen, die den Entschlüsselungsschlüssel zum Entschlüsseln des Chiffretexts der Zieldaten anzeigen, der durch das Suchergebnis angezeigt wird, an das Such-Endgerät (3) überträgt, und
wobei das Such-Endgerät (3) ferner Folgendes enthält:
eine Entschlüsselungseinheit (37) für verschlüsselte Daten, die den Chiffretext der Zieldaten, der durch das Suchergebnis angezeigt wird, unter Verwendung des Entschlüsselungsschlüssels dazu entschlüsselt, ursprüngliche Zieldaten zu erfassen.

4. Vorrichtung (1₁, ..., 1_{N}) zur sicheren Suche, die in dem System (100) zur sicheren Suche nach Anspruch 3 verwendet wird.

5. Verschlüsselungsvorrichtung (2), die in dem System (100) zur sicheren Suche nach Anspruch 3 verwendet wird.

6. Such-Endgerät (3), das in dem System (100) zur sicheren Suche nach Anspruch 3 verwendet wird.

7. Programm zum Veranlassen, dass ein Computer jeden Schritt des Verfahrens zur sicheren Suche nach einem der Ansprüche 1 bis 2 auszuführt.

## Revendications

1. Procédé de recherche sécurisée exécuté par un système de recherche sécurisée incluant au moins un appareil de recherche sécurisée, un appareil de chiffrement et un terminal de recherche, le procédé de recherche sécurisée comprenant :
l'extraction (S22) d'une caractéristique cible en convertissant des données cibles qui sont une cible de recherche et le chiffrement (S25-1) de la caractéristique cible qui représente les données cibles par une unité de chiffrement de caractéristique cible de l'appareil de chiffrement ;
le chiffrement (S24-1) d'un drapeau cible représentant un attribut des données cibles par une unité de chiffrement de drapeau cible de l'appareil de chiffrement ;
l'extraction (S32) d'une caractéristique de condition en convertissant des données de condition qui sont une condition de recherche et le chiffrement (S35) de la caractéristique de condition qui représente les données de condition par une unité de chiffrement de caractéristique de condition du terminal de recherche ;
le chiffrement (S34) d'un drapeau de condition représentant un attribut des données de condition par une unité de chiffrement de drapeau de condition du terminal de recherche ;
l'acquisition (S11) d'un résultat de recherche intermédiaire indiquant un texte chiffré de la caractéristique cible correspondant au drapeau cible correspondant au drapeau de condition tout en gardant le drapeau cible et le drapeau de condition secrets en utilisant un texte chiffré du drapeau cible et un texte chiffré du drapeau de condition, par une unité de recherche de drapeau de l'appareil de recherche sécurisée ; et
l'acquisition (S11) d'un résultat de recherche indiquant le texte chiffré des données cibles correspondant à la caractéristique cible similaire à la caractéristique de condition tout en gardant la caractéristique cible et la caractéristique de condition secrètes en utilisant le texte chiffré de la caractéristique cible indiqué par le résultat de recherche intermédiaire et un texte chiffré de la caractéristique de condition par une unité de recherche de caractéristique de l'appareil de recherche sécurisée,
dans lequel le texte chiffré de la caractéristique cible et le texte chiffré de la caractéristique de condition sont chiffrés par un premier procédé de chiffrement capable d'un calcul sécurisé, et
dans lequel le procédé comprend en outre :
le chiffrement (S26-1) des données cibles en utilisant un second procédé de chiffrement qui est différent du premier procédé de chiffrement et nécessite une clé de déchiffrement pour un déchiffrement par une unité de chiffrement de données cibles de l'appareil de chiffrement ;
la transmission (S27-1) d'informations indiquant la clé de déchiffrement pour déchiffrer le texte chiffré des données cibles indiqué par le résultat de recherche au terminal de recherche par une unité de transmission de clé de déchiffrement de l'appareil de chiffrement ; et
le déchiffrement (S37) du texte chiffré des données cibles indiqué par le résultat de recherche en utilisant la clé de déchiffrement pour acquérir des données cibles d'origine par une unité de déchiffrement de données chiffrées du terminal de recherche.

2. Procédé de recherche sécurisée selon la revendication 1,
dans lequel les données cibles sont des données d'image incluses dans une vidéo capturée par une caméra de surveillance,
les données de condition sont des données d'image dans lesquelles un visage d'une personne spécifique est capturé,
le drapeau cible représente un attribut d'une personne apparaissant dans les données cibles, et
le drapeau de condition représente un attribut d'une personne apparaissant dans les données de condition.

3. Système de recherche sécurisée (100) comprenant au moins un appareil de recherche sécurisée (1₁, ..., 1_{N}), un appareil de chiffrement (2) et un terminal de recherche (3),
l'appareil de chiffrement (2) incluant
une unité de chiffrement de caractéristique cible (25) qui extrait une caractéristique cible en convertissant des données cibles qui sont une cible de recherche et chiffre la caractéristique cible qui représente les données cibles et
une unité de chiffrement de drapeau cible (24) qui chiffre un drapeau cible représentant un attribut des données cibles,
le terminal de recherche (3) incluant
une unité de chiffrement de caractéristique de condition (35) qui extrait une caractéristique de condition en convertissant des données de condition qui sont une condition de recherche et chiffre la caractéristique de condition qui représente les données de condition et
une unité de chiffrement de drapeau de condition (34) qui chiffre un drapeau de condition représentant un attribut des données de condition,
l'appareil de recherche sécurisée (1₁, ..., 1_{N}) incluant
une unité de recherche de drapeau (11) qui acquiert un résultat de recherche intermédiaire indiquant un texte chiffré de la caractéristique cible correspondant au drapeau cible correspondant au drapeau de condition tout en gardant le drapeau cible et le drapeau de condition secrets en utilisant un texte chiffré du drapeau cible et un texte chiffré du drapeau de condition et
une unité de recherche de caractéristique (12) qui acquiert un résultat de recherche indiquant le texte chiffré des données cibles correspondant à la caractéristique cible similaire à la caractéristique de condition tout en gardant la caractéristique cible et la caractéristique de condition secrètes en utilisant le texte chiffré de la caractéristique cible indiqué par le résultat de recherche intermédiaire et un texte chiffré de la caractéristique de condition,
dans lequel le texte chiffré de la caractéristique cible et le texte chiffré de la caractéristique de condition sont chiffrés par un premier procédé de chiffrement capable d'un calcul sécurisé, et
dans lequel l'appareil de chiffrement (2) inclut en outre :
une unité de chiffrement de données cibles (26) qui chiffre les données cibles en utilisant un second procédé de chiffrement qui est différent du premier procédé de chiffrement et nécessite une clé de déchiffrement pour un déchiffrement ; et
une unité de transmission de clé de déchiffrement (27) qui transmet des informations indiquant la clé de déchiffrement pour déchiffrer le texte chiffré des données cibles indiqué par le résultat de recherche au terminal de recherche (3), et
dans lequel le terminal de recherche (3) inclut en outre :
une unité de déchiffrement de données chiffrées (37) qui déchiffre le texte chiffré des données cibles indiqué par le résultat de recherche en utilisant la clé de déchiffrement pour acquérir des données cibles d'origine.

4. Appareil de recherche sécurisée (1₁, ..., 1_{N}) utilisé dans le système de recherche sécurisée (100) selon la revendication 3.

5. Appareil de chiffrement (2) utilisé dans le système de recherche sécurisée (100) selon la revendication 3.

6. Terminal de recherche (3) utilisé dans le système de recherche sécurisée (100) selon la revendication 3.

7. Programme pour amener un ordinateur à exécuter chaque étape du procédé de recherche sécurisée selon l'une quelconque des revendications 1 à 2.
